# FASCICULE DE BREVET EUROPEEN

(11) **EP 1 027 831 B1**
(45) Date de publication et mention de la délivrance du brevet: **12.10.2005**
(21) Numéro de dépôt: 99200395.4
(22) Date de dépôt: 12.02.1999
(51) Int. Cl.: A23D 9/00, A23L 1/30

(54) **Composition lipidique stabilisée, procédé de préparation et produit nutritionnel la contenant**
Stabilisierte Fettmischung, Methode zu ihrer Herstellung und Lebensmittel, welches das Fett enthält
Stabilized fat composition, method of preparation and food product containing the fat

(43) Date de publication de la demande: 16.08.2000
(73) Titulaire: SOCIETE DES PRODUITS NESTLE S.A., 1800 Vevey (CH)
(72) Inventeur: Wang, Junkuan, 1010 Lausanne (CH); Bertholet, Raymond, 1807 Blonay (CH)
(74) Mandataire: Archambault, Jean

(56) Documents cités:
- EP-A- 0 893 064
- WO-A-89/02275

## Description

L'invention se rapporte au domaine de la stabilisation et de l'absorption des lipides contenant des acides gras polyinsaturés à longue chaîne.

Deux acides gras polyinsaturés à longue chaîne (LC-PUFA), l'acide docosa-hexaénoique (DHA, C22:6, n-3) et l'acide arachidonique (AA, C20:4, n-6) sont des LC-PUFAs importants dans la graisse de lait humain. Le DHA est essentiel pour le développement du cerveau et de la vue et l'AA est associé à la fonction immunitaire et à la croissance du petit enfant. C'est pour celà que l'on ajoute des sources de ces acides aux produits infantiles, en général sous forme de mélanges de triacylglycérols (TAGs) enrichis en les LC-PUFAs en question. Il peut s'agir de mélanges de concentrés d'AA et de DHA d'origine fermentaire ou encore de concentré d'AA d'origine fermentaire additionné d'huile de poisson contenant en prédominance le DHA et en quantité moindre l'acide éicosapentaénoique (EPA, C20:5, n-3).

Les LC-PUFAs sont extrêmement sensibles à l'oxydation. Leur dégradation oxydative et la détérioration de la qualité associée se manifeste par des odeurs désagréables et une diminution de la qualité nutritionnelle des mélanges de TAGs.

Dans US-A-5 686 131, il est décrit que la stabilité oxydative des LC-PUFAs peut être améliorée par interestérification d'une huile très riche en PUFA de degré d'insaturation au moins 3 et d'une huile contenant des acides gras saturés à longue chaîne, de C 16 à C22 (LC-SFA). Le produit obtenu a un point de fusion élevé, jusqu'à 80° C dû à la présence d'une certaine quantité de TAGs trisaturés, ce qui le rend difficile à manipuler dans une production alimentaire du fait du risque élevé de détérioration oxydative lors de sa fusion qui nécessite un chauffage prolongé à température élevée. De plus, les TAGs contenant seulement des acides gras saturés à longue chaîne sont absorbés plus lentement que ceux qui contiennent des acides gras saturés à chaîne moyenne. Les LC-SFAs sont très peu absorbés lorsque qu'ils sont en positions 1 et 3 des TAGs. Du fait qu'ils forment des sels insolubles avec le calcium, ces LC-SFAs non absorbés induisent une réduction de l'absorption du calcium. Enfin, le produit de l'interestérification est désodorisé à température élevée, supérieure à 240° C, ce qui est susceptible de générer des acides gras trans qui ne sont pas recommandés dans les applications diététiques.

WO 89/02775 décrit des compositions lipidiques pour lutter contre les infections et les problèmes utherosclerotiques. Il s'agit d'une composition lipidique synthetique ou même d'un mélange physique des acides gras. Dans EP 893 064 ll est décrit un lipide diététique avec une composition lipidique proche de celle du lait humain pour formules infantiles.

Le but de l'invention est de mettre à disposition une composition lipidique stabilisée capable de fournir la quantité requise de LC-PUFA par une absorption améliorée sans réduire l'absorption du calcium, destinée à être incorporée dans un produit diététique sans que ce dernier ne subisse de dégradation oxydative ou nutritionnelle du fait de cette incorporation.

Ainsi, la composition lipidique stabilisée selon l'invention est constituée de TAGs interestérifiés de manière aléatoire comprenant, en poids des résidus d'acides gras, moins de 5 % en poids de LC-PUFA en C20 et plus de degré d'insaturation 4 et plus, comprenant en prédominance AA, DHA ou EPA,
au moins 80 % en poids de MC-SFA en C6 à C14 et
les TAGs contenant des LC-PUFAs sont constitués pratiquement exclusivement de mono-LC-PUFA.

MC-SFA, en C6 à C14 désigne les acides gras saturés à chaîne moyenne qui sont rapidement absorbés par l'organisme, ne forment pas de savons insolubles avec le calcium comme c'est le cas des LC-SFAs et n'influencent pas négativement l'absorption du calcium. Les lipides contenant ces acides gras sont choisis parmi les MCT naturels ou synthétiques contenant les acides caproique, caprylique, caprique, laurique et myristique. On peut citer les graisses de coco, de babassu et de palmiste.

L'invention concerne également un procédé de préparation de la composition lipidique stabilisée précédente comprenant les étapes suivantes:
- On conduit l'interestérification chimique d'un mélange contenant i) 1 à 20 % d'une huile riche en LC-PUFA de degré d'insaturation 4 et plus contenant les acides AA, DHA ou EPA et ii) 80 à 99 % d'une huile riche en MC-SFA, en présence d'éthylate ou de méthylate de sodium à titre de catalyseur, de manière à redistribuer aléatoirement les acides gras sur le squelette de glycérol,
- On lave le produit de la réaction avec un milieu aqueux de manière à le débarasser des résidus alcalins et de savon,
- On raffine le produit lavé par mise en contact avec un adsorbant retenant les traces de savon et de produits secondaires de la réaction et séparation de l'adsorbant et
- On désodorise le produit raffiné par entraînement à la vapeur à environ 190° C sous vide, ce qui conduit à une huile désodorisée, décolorée et stabilisée.

La réaction est conduite de manière à minimiser la quantité d'eau présente dans le mélange d'huiles de départ. Ainsi, on le sèche de préférence à 80-85° C sous vide, par exemple de 20 mbar environ avant l'addition du catalyseur.

Le catalyseur doit être frais. On peut utiliser le méthylate ou l'éthylate de sodium, ce dernier étant préféré. La quantité mise en oeuvre est environ 0,2 % en poids, basée sur le mélange de départ.

On chauffe le mélange d'huiles de départ jusqu'à la température de réaction désirée, de préférence 80 à 90° C avant d'ajouter le catalyseur. Cette adjonction s'effectue sous forte agitation pour disperser le catalyseur de manière homogène. La réaction s'effectue de préférence sous un vide de 20 mbar environ, pendant environ 30 min.

Après réaction, on ajoute de l'eau au mélange réactionnel pour inactiver le catalyseur et pour laver les résidus de savon formés. On peut ajouter du NaCl au milieu aqueux, par exemple à une concentration de 2 % en poids environ, pour éviter la formation d'une émulsion qui entraînerait une perte en huile. Ce lavage peut ête renouvelé 1 à 2 fois pour réduire la concentration en savon en dessous de 200 ppm (partie par million) environ.

Pour éliminer les traces de savon, on traite l'huile lavée avec un absorbant, par exemple un gel de silice et on décolore l'huile avec une terre décolorante, ces opérations étant de préférence effectuées par mise en contact de l'huile séquentiellement avec l'agent absorbant et séparation de l'huile raffinée des agents absorbants, par exemple par filtration.

On désodorise ensuite l'huile raffinée par entraînement à la vapeur à environ 190° C pendant environ 3 h sous vide poussé, par exemple d'environ 1 à 3 mbar.

Le cas échéant, on peut alors y ajouter du tocophérol naturel à titre d'antioxydant.

L'invention concerne également un produit nutritionnel contenant une composition lipidique telle que définie précédemment. Elle concerne notamment un aliment infantile contenant des protéines, le cas échéant hydrolysées, des hydrates de carbone, des lipides et le cas échéant des vitamines et des oligoéléments, caractérisé par le fait qu'il contient, en poids des matières sèches, 15 à 35 % de lipides dont 5 à 50 % sont constitués de la composition lipidique précédente.

Par produit nutritionnel on entend aussi bien un produit de nutrition clinique, par exemple entérale, infantile ou adulte, qu'un aliment infantile. Un tel aliment peut être préparé sous forme liquide ou de poudre avec incorporation de la composition lipidique précédente, par mélange humide des différents constituents, puis stérilisation ou pasteurisation et conditionnement aseptique dans le cas d'un produit liquide ou par séchage, par exemple par pulvérisation ou encore par mélange à sec dans le cas d'une poudre.

Les exemples ci-après illustrent l'invention. Dans ceux-ci, les parties et pourcentages sont en poids, sauf indication contraire.

### Exemple 1

### 1.1) Interestérification chimique

Dans un réacteur de 1000 ml à double paroi, muni d'un agitateur de type ancre et d'un thermomètre, on interestérifie de manière aléatoire 700 g d'un mélange lipidique contenant 50 g d'huile de poisson (à 24 % de DHA et 5 % d'EPA), 14 g d'huile source d'AA (contenant 53 % d'AA), 636 g de MCT en présence de 1,4 g d'éthylate de sodium à titre de catalyseur à 85° C sous forte agitation continuelle sous un vide de 20 mbar pendant 30 min. On lave ensuite le mélange réactionnel sous agitation modérée avec 70 g d'une solution aqueuse chaude contenant 7 g de chlorure de sodium. On arrête l'agitation après 2 min. et on laisse décanter le mélange pendant 2 h. On sépare et on élimine la phase lourde contenant l'eau, le chlorure de sodium et les savons formés par décomposition du catalyseur. On répète cette opération de lavage jusqu'à ce que le contenu en savon de l'huile interestérifiée déterminé par titration soit < 200 mg/kg, ce qui nécessite normalement 2 à 3 lavages.

### 1.2) Raffinage

L' addition de 3,5 g de silicagel (Trisyl 300 ®) à l'huile interestérifiée brute permet d'éliminer les résidus de savon. A cet effet, on traite le mélange à 85° C sous un vide de 20 mbar pendant 20 min. On y ajoute ensuite 1,4 g de terre décolorante (Tonsil Optimum FF®) et 0,7 g d'agent d'aide à la filtration (Dicalite 4258S ®), puis on décolore le mélange pendant 20 min. à 85° C sous un vide de 20 mbar. Enfin, on filtre le mélange sur entonnoir Buchner à 50-60° C. On obtient ainsi 670 g d'huile raffinée contenant moins de 1mg de savon par kg.

### 1.3) Désodorisation

On désodorise 300 g de l'huile raffinée précédente par entraînement à la vapeur à 190° C sous un vide de 1-2 mbar pendant 3 h, puis on filtre l'huile sur entonnoir Buchner à 50-60° C. L'huile obtenue peut être protégée de l'oxydation par addition de tocophérols naturels.

### 1.4) Propriétés de l'huile interestérifiée

L'huile interestérifiée raffinée et désodorisée précédente a une couleur jaune pâle et est exempte d'odeur de poisson.

Un avantage important de l'huile précédente est qu'elle peut être traitée dans un procédé de fabrication d'un aliment final, directement à partir d'une chambre froide d'entreposage, par exemple à 4° C sans qu'il ne soit nécessaire de la tempérer préalablement dans une chambre chaude pendant de nombreuses heures. Cet avantage résulte du fait que l'huile reste à l'état de liquide clair même à basse température et que l'on peut minimiser sa dégradation en évitant de la chauffer.

La pureté de l'huile interestérifiée précédente est bien supérieure à celle d'un mélange physique des mêmes huiles de départ dans les mêmes proportions comme celà ressort des analyses des fractions polaires des produits de polymérisation et de dégradation oxydatives, par chromatographie d'exclusion à haute performance (HPSEC) et par les valeurs de p-anisidine.

Les résultats de l'analyse des acides gras de l'huile interestérifiée par chromatographie en phase gazeuse de leur esters méthyliques (fames) ainsi que de leur répartition sont indiqués dans le tableau 1 ci-après:

**Tableau 1**

| **Acide gras** | **g ac.gras/ 100 g ac.gras** |
|---|---|
| C6:0 caproique | 0,49 |
| C8:0 caprylique | 53,32 |
| C10:0 caprique | 40,24 |
| C12:0 laurique | 0,51 |
| C14:0 myristique | 0,18 |
| C16:0 palmitique | 1,06 |
| C18:0 stéarique | 0,40 |
| C18:1 oléique | 0,73 |
| C18:2 linoléique | 0,16 |
| C18:3 linolénique | 0,07 |
| C20:4, n-6 arachidonique (AA) | 0,81 |
| C20:5, n-3 eicosapentaénoique (EPA) | 0,25 |
| C22:6 n-3 docosahexaénoique (DHA) | 1,07 |
| autres | 0,71 |
| Total | 100 |
| Total LC-PUFA (n> ou = 4) | 2,13 |

Pour comparer l'huile interestérifiée au mélange physique des huiles de départ, on a équilibré leur teneur en tocophérols et on a déterminé leur stabilité oxydative dans un test d'oxydation accélérée par entreposage à 40° C. Pour ce faire, on a placé 15 g du corps gras à analyser dans un flacon cylindrique de 100 ml, de diamètre intérieur 42,4 mm, que l'on a bouché à l'air ambiant, puis placé dans une étuve à 40° C. On a maintenu les échantillons 1 j à l'obscurité avant d'effecture les mesures.

On a mesuré la consommation d'oxygène (dans l'espace de tête et par la méthode Oxitop), la composition de l'espace statique (éthane, pentane, éthylène), l'index de peroxydes (POV), la perte en LC-PUFA (par chromatographie en phase gazeuse, GC) ainsi que la formation des lipides polaires. Tous les résultats de ces analyses ont montré de manière concordante la stabilité améliorée de l'huile interestérifiée par rapport au mélange physique des huiles de départ.

En particulier, par la mesure des gas de l'espace de tête, on a constaté une oxydation sensible du mélange physique dès le 55 ème jour d'entreposage alors que l'huile interestérifiée restait stable jusqu'au 75 ème jour.

De plus, au bout de 75 j d'entreposage à 40° C, l'index de peroxyde de l'huile interestérifiée dans un mélange d'huiles à 2,13 % de LC-PUFA correspondait à environ 70 % de celui obtenu pour le mélange physique des huiles dans les mêmes conditions d'utilisation.

Par ailleurs, les pertes en LC-PUFA (mesurées par GC) de l'huile interestérifiée représentaient environ 60 % de celles observées pour le mélange physique après 75 j d'entreposage à 40° C. On observait une bonne corrélation avec l'augmentation des lipides polaires dans un mélange d'huiles à 2,13 % de LC-PUFA, le pourcentage de lipides polaires formés étant pour le mélange physique environ 3x celui constaté dans le cas de l'huile interestérifiée.

A titre de comparaison par rapport à l'état de la technique représenté par US-A-5 686 131, on a étudié les index de peroxyde dans un milieu à 11 % de LC-PUFA (de degré d'insaturation 4 et plus), comme décrit dans ce document, en remplaçant la matière grasse hydrogénée par les MCT lors de l'interestérification. De manière surprenante, on a constaté qu'après 13 j d'entreposage à 40° C, l'huile interestérifiée avait un index de peroxyde environ double de celui du mélange physique et était par conséquent beaucoup moins stable que le mélange physique. Celà montre que l'interestérification dans ce cas n'améliore pas la stabilité mais, au contraire, la détériore.

### Exemple 2

On interestérifie un mélange de 95,1 % d'huile de coco , 2,7 % d'huile de poisson source de DHA et 2,2 % d'huile d'organisme cellulaire source de AA, puis on la raffine et on désodorise l'huile interestérifiée en procédant comme à l'exemple 1. On peut y ajouter ensuite des tocophérols naturels à titre d'antioxydant.

Les résultats de l'analyse des acides gras de l'huile interestérifiée par chromatographie en phase gazeuse de leur esters méthyliques (fames) ainsi que de leur répartition sont indiqués dans le tableau 2 ci-après:

**Tableau 2**

| **Acide gras** | **g ac.gras/ 100 g ac. gras** |
|---|---|
| C6:0 caproique | 0,64 |
| C8:0 caprylique | 7,47 |
| C10:0 caprique | 5,65 |
| C12:0 laurique | 44,88 |
| C14:0 myristique | 16,74 |
| C16:0 palmitique | 9,36 |
| C18:0 stéarique | 2,99 |
| C18:1 oléique | 7,43 |
| C18:2 linoléique | 1,79 |
| C18:3 linolénique | 0,14 |
| C20:4, n-6 arachidonique (AA) | 1,12 |
| C20:5, n-3 eicosapentaénoique (EPA) | 0,13 |
| C22:6, n-3 docosahexaénoique (DHA) | 0,63 |
| autres | 1,03 |
| Total | 100 |
| Total LC-PUFA (n > ou = 4) | 1,88 |

On utilise cette huile interestérifiée ainsi protégée à raison de 23 % dans une composition lipidique pour aliment infantile consituant la partie lipidique de cet aliment, le reste étant constitué de 77 % d'un mélange d'oléine de palme, d'huile de soja et d'huile de tournesol à haute teneur en acide oléique. La mesure de la consommation d'oxygène, par la méthode de la détermination de la diminution de pression dans l'espace de tête à 40° C, montre que cette composition lipidique est plus stable que celle contenant le mélange physique à la même concentration.

## Revendications

1. Composition lipidique stabilisée constituée de TAGs interestérifiés de manière aléatoire comprenant, en poids des résidus d'acides gras,
moins de 5 % en poids de LC-PUFA en C20 et plus de degré d'insaturation 4 et plus, comprenant en prédominance AA, DHA ou EPA,
au moins 80 % en poids de MC-SFA en C6 à C14 et
les TAGs contenant des LC-PUFAs sont constitués pratiquement exclusivement de mono-LC-PUFA.

2. Composition lipidique selon la revendication 1, **caractérisée par le fait que** les AA et DHA sont prédominants dans les LC-PUFAs des triacylglycérols.

3. Composition lipidique selon la revendication 1, **caractérisée par le fait que** les acides gras saturés des triacylglycérols sont en prédominance C8 et C10.

4. Composition lipidique selon la revendication 1, **caractérisée par le fait que** les acides gras saturés des triacylglycérols sont en prédominance C12 et C14.

5. Procédé de préparation d'une composition lipidique selon l'une des revendications 1 à 4, **caractérisé par** les étapes successives suivantes:
- On conduit l'interestérification chimique d'un mélange contenant i) 1 à 20 % d'une huile riche en LC-PUFA de degré d'insaturation 4 et plus contenant les acides AA, DHA ou EPA et ii) 80 à 99 % d'une huile riche en MC-SFA, en présence d'éthylate ou de méthylate de sodium à titre de catalyseur, de manière à redistribuer aléatoirement les acides gras sur lé squelette de glycérol,
- On lave le produit de la réaction avec un milieu aqueux de manière à le débarasser des résidus alcalins et de savon,
- On raffine le produit lavé par mise en contact avec un adsorbant retenant les traces de savon et de produits secondaires de la réaction et séparation de l'adsorbant et
- On désodorise le produit raffiné par entraînement à la vapeur à environ 190° C sous vide, ce qui conduit à une huile désodorisée, décolorée et stabilisée.

6. Produit nutritionnel, **caractérisé par le fait qu'**il contient une composition lipidique selon l'une des revendications 1 à 4.

7. Aliment infantile, contenant des protéines, le cas échéant hydrolysées, des hydrates de carbone, des lipides et le cas échéant des vitamines et des oligoéléments, **caractérisé par le fait qu'**il contient, en poids des matières sèches, 15 à 35 % de lipides dont 5 à 50 % sont constitués d'une composition lipidique selon l'une des revendications 1 à 4.

8. Procédé de préparation d'un aliment infantile selon la revendication 7, sous forme liquide ou de poudre, par mélange humide des différents constituents, puis stérilisation ou pasteurisation et conditionnement aseptique dans le cas d'un produit liquide ou par séchage, par exemple par pulvérisation ou encore par mélange à sec dans le cas d'une poudre, **caractérisé par le fait que** l'on y incorpore une composition lipidique selon l'une des revendications 1 à 4.

## Patentansprüche

1. Stabilisierte Lipidzusammensetzung, die aus statistisch umgeesterten TAGs besteht, die, bezogen auf das Gewicht der Fettsäurereste,
weniger als 5 Gew.-% LC-PUFA mit 20 und mehr Kohlenstoffatomen und einem Unsättigungsgrad von 4 und mehr, die überwiegend AA, DHA oder EPA umfassen,
und mindestens 80 Gew.-% MC-SFA mit 6 bis 14 Kohlenstoffatomen umfassen,
wobei die LC-PUFA enthaltenden TAGs praktisch ausschließlich aus Mono-LC-PUFA bestehen.

2. Lipidzusammensetzung nach Anspruch 1, **dadurch gekennzeichnet, dass** die AA und DHA in den LC-PUFA der Triacylglycerine vorherrschen.

3. Lipidzusammensetzung nach Anspruch 1, **dadurch gekennzeichnet, dass** die gesättigten Fettsäuren der Triacylglycerine vorwiegend 8 und 10 Kohlenstoffatome aufweisen.

4. Lipidzusammensetzung nach Anspruch 1, **dadurch gekennzeichnet, dass** die gesättigten Fettsäuren der Triacylglycerine vorwiegend 12 und 14 Kohlenstoffatome aufweisen.

5. Verfahren zur Herstellung einer Lipidzusammensetzung nach einem der Ansprüche 1 bis 4, **gekennzeichnet durch** die folgenden aufeinanderfolgenden Schritte:
- man nimmt die chemische Umesterung einer Mischung, die i) 1 bis 20 % eines Öls mit einem hohen Gehalt an LC-PUFA mit dem Unsättigungsgrad 4 und mehr, die die Säuren AA, DHA oder EPA enthalten, und ii) 80 bis 99 % eines Öls mit einem hohen Gehalt an MC-SFA enthält, in Gegenwart von Natriumethylat oder
- methylat als Katalysator so vor, dass die Fettsäuren auf dem Glycerin-Gerüst statistisch umverteilt werden,
- man wäscht das Produkt der Reaktion mit einem wässrigen Medium so, dass es von den alkalischen Rückständen und von Seife befreit wird,
- man raffiniert das gewaschene Produkt **durch** In-Kontakt-Bringen mit einem Adsorptionsmittel, das die Spuren von Seife und Nebenprodukten der Reaktion zurückhält, und Abtrennung des Adsorptionsmittels und
- man desodorisiert das raffinierte Produkt **durch** Dampfdestillation bei etwa 190°C unter Unterdruck, was ein desodorisiertes, entfärbtes und stabilisiertes Öl ergibt.

6. Nahrungsprodukt, **dadurch gekennzeichnet, dass** es eine Lipidzusammensetzung nach einem der Ansprüche 1 bis 4 enthält.

7. Kindernahrungsmittel, das Proteine, die ggf. hydrolysiert sind, Kohlenhydrate, Lipide und ggf. Vitamine und Spurenelemente enthält, **dadurch gekennzeichnet, dass** es, in Gewicht der Trockenmasse, 15 bis 35 % Lipide enthält, von denen 5 bis 50 % aus einer Lipidzusammensetzung nach einem der Ansprüche 1 bis 4 bestehen.

8. Verfahren zur Herstellung eines Kindernahrungsmittels nach Anspruch 7 in flüssiger Form oder Pulverform durch feuchtes Mischen der einzelnen Bestandteile und dann Sterilisierung oder Pasteurisierung und keimfreie Verpackung im Fall eines flüssigen Produkts oder durch Trocknung, beispielsweise Sprühtrocknung oder durch trockenes Mischen, im Fall eines Pulvers, **dadurch gekennzeichnet, dass** man in dieses eine Lipidzusammensetzung nach einem der Ansprüche 1 bis 4 einarbeitet.

## Claims

1. A stabilised lipid composition made up of randomly interesterified TAGs comprising, by weight of fatty acid residues,
less than 5% by weight of C20 and greater LC-PUFA of a degree of unsaturation of 4 and above, predominantly comprising AA, DHA or EPA,
at least 80% by weight of C6 to C14 MC-SFA and
the TAGs containing LC-PUFAs are virtually exclusively made up of mono-LC-PUFA.

2. A lipid composition according to claim 1, **characterised in that** AA and DHA predominate among the LC-PUFAs of the triacylglycerols.

3. A lipid composition according to claim 1, **characterised in that** the saturated fatty acids of the triacylglycerols are predominantly C8 and C10.

4. A lipid composition according to claim 1, **characterised in that** the saturated fatty acids of the triacylglycerols are predominantly C12 and C14.

5. A process for the preparation of a lipid composition according to any one of claims 1 to 4, **characterised by** the following successive steps:
- a mixture containing i) 1 to 20% of an oil rich in LC-PUFA of a degree of unsaturation of 4 and above containing the acids AA, DHA or EPA and ii) 80 to 99% of an oil rich in MC-SFA, is chemically interesterified in the presence of sodium ethylate or methylate as catalyst, in such a manner as to redistribute the fatty acids randomly on the glycerol skeleton,
- the reaction product is washed with an aqueous medium in such a manner as to remove any alkali and soap residues,
- the washed product is refined by being contacted with an adsorbent which retains traces of soap and secondary reaction products and separating the adsorbent and
- the refined product is deodorised by steam stripping at approx. 190°C under a vacuum, which gives rise to a deodorised, decolourised and stabilised oil.

6. A nutritional product, **characterised in that** it contains a lipid composition according to any one of claims 1 to 4.

7. A baby food containing proteins, optionally hydrolysed, carbohydrates, lipids and, optionally, vitamins and trace elements, **characterised in that** it contains, by weight of dry solids, 15 to 35% of lipids, 5 to 50% of which are made up of a lipid composition according to any one of claims 1 to 4.

8. A process for the preparation of a baby food according to claim 7, in liquid or powder form, by wet-mixing the various constituents, followed by sterilisation or pasteurisation and aseptic packaging in the case of a liquid product or by drying, for example spray-drying, or alternatively by dry-mixing in the case of a powder, **characterised in that** a lipid composition according to any one of claims 1 to 4 is incorporated therein.
